# EUROPÄISCHE PATENTSCHRIFT

(11) **EP 2 472 289 B1**
(45) Veröffentlichungstag und Bekanntmachung des Hinweises auf die Patenterteilung: **02.01.2013**
(21) Anmeldenummer: 10450188.7
(22) Anmeldetag: 07.12.2010
(51) Int. Cl.: G01S 13/88

(54) **Fahrzeuggerät und Verfahren zur insassenzahlabhängigen Vermautung von Fahrzeugen**
Vehicle device and method for levying vehicle tolls depending on the number of passengers
Appareil pour véhicule et procédé de péage dépendant des passagers de véhicules

(43) Veröffentlichungstag der Anmeldung: 04.07.2012
(73) Patentinhaber: Kapsch TrafficCom AG, 1120 Wien (AT)
(72) Erfinder: Karner, Georg, 1050 Wien (AT)
(74) Vertreter: Weiser, Andreas

(56) Entgegenhaltungen:
- DE-A1-102005 020 847
- DAVID UNGEMAH ET AL: "Automated Vehicle Occupancy Verification Systems. Policy and Legal Implications", TRANSPORTATION RESEARCH RECORD, Bd. 2065, 2008, Seiten 41-46, XP009148032, ISSN: 0361-1981, DOI: DOI:10.3141/2065-06 [gefunden am 2008-11-24]
- GOODIN G: "Violations Enforcement Summit passage", VIOLATIONS ENFORCEMENT SUMMIT, IBTTA, 29. Juli 2007 (2007-07-29), Seiten 1-5, XP007918560,

## Beschreibung

Die vorliegende Erfindung betrifft ein Fahrzeuggerät und ein Verfahren zur insassenzahlabhängigen Vermautung eines Fahrzeugs im Rahmen eines Straßenmautsystems.

Die Vermautung von Fahrzeugen abhängig von der Anzahl ihrer Insassen wird häufig als verkehrspolitische Maßnahme zur Regulierung des Verkehrsaufkommens eingesetzt. Eine bevorzugte Anwendung sind sogenannte HOT-Lanes (high occupancy toll lanes). HOT-Lanes sind an sich für Fahrzeuge mit mehreren Insassen (high occupancy vehicles, HOV) reservierte Fahrspuren, die aber auch von Fahrzeugen mit weniger Insassen benützt werden dürfen, soferne eine - dementsprechend insassenabhängige - Benutzungsmaut entrichtet wird.

Um die mit einer Selbstdeklaration der Insassenanzahl verbundene Manipulationsgefahr bzw. die mit einer visuellen Inspektion durch Kontrollpersonal verbundene Fehlergefahr zu beseitigen, werden in zunehmendem Maße elektronische Mautsysteme eingesetzt, welche die Insassenanzahl automatisch detektieren und eine davon abhängige Maut berechnen. Diese Systeme verwenden elektronische Fahrzeuggeräte (onboard units, OBUs), welche mit Insassendetektoren ausgerüstet sind.

Ein Überblick über die derzeit verfügbaren Systeme wird in den Publikationen "Automated Vehicle Occupancy Monitoring Systems for HOV/HOT Facilities - Final Report", McCormick Ranking Corporation, Ontario, Kanada, Dezember 2004; Steven Schijns und Paul Matthews, "A Breakthrough in Automated Vehicle Occupancy Monitoring Systems for HOV/HOT Facilities", l2th HOV Systems Conference, Houston, Texas, 20. April 2005; Ginger Goodin, "Verifying Vehicle Occupancy for HOT Lanes - A Path Toward Automated Systems", Violations Enforcement Summit, Boston, Massachusetts, 29. - 31. Juli 2007; und Ginger Goodin und John P. Wikander, "Out for the Count - Verifying Vehicle Occupancy: Prospects for an Automated Solution", Tolltrans 2009, Seiten 44 - 49; gegeben.Ginger Goodin, "Verifying Vehicle Occupancy for HOT Lanes - A Path Toward Automated Systems", Violations Enforcement Summit, Boston, Massachusetts, 29. - 31. Juli 2007, zählt mögliche Sensortechnologien innerhalb oder außerhalb eines Fahrzeugs zur Bestimmung der Insassenanzahl sowie Szenarien für deren Einsatz auf. Die bekannten Systeme schlagen u.a. Gewichts-, Thermo-, Infrarot-, Ultraschall- oder Radarsensoren zur Detektion der Anwesenheit sowie biometrische Sensoren zur Detektion von Fingerabdrücken, Gesichtern, Herzschlag- oder Lungenfunktionen der Insassen vor. Für letztere Messungen werden bislang elektrische Sensoren oder Drucksensoren eingesetzt, welche Körperströme der Insassen oder respiratorische Druckschwankungen messen. "Automated Vehicle Occupancy Monitoring Systems for HOV/HOT Facilities - Final Report", McCormick Ranking Corporation, Ontario, Kanada, Dezember 2004, beschreibt ein Kommunikationssystem zum Andocken an neue, adaptive Airbag-Systeme zur Weiterleitung der Werte ihrer Sitzbelegungserkennung an eine HOT-Lane-Überwachung.

Für die Detektion der Sitzbelegung von Fahrzeugsitzen zwecks intelligenter Steuerung von Airbags ("smart airbags"), wurden in letzter Zeit Radarsensoren entwickelt, welche die schwachen periodischen Bewegungen des menschlichen Körpers aufgrund seiner Vitalfunktionen, wie Herzschlag und Atmung, detektieren können. Diese Radarsensoren verwenden entweder CW-Dopplerradar im UHF-Bereich (ultra-high frequencies continuous-wave Doppler radar) oder die neue Gattung von ultra-wideband (UWB) Impulsradar (UWB-IR), welche berührungslos und durch Medien wie Kleidung und Körperschichten hindurch die rhythmischen Bewegungen der Herzkammern bzw. Lungenflügel vermessen können. Hinsichtlich der theoretischen Grundlagen dieser Sensoren wird auf die Publikationen Jerry Silvious und David Tahmoush, "UHF Measurement of Breathing and Heartbeat at a Distance", IEEE Radio and Wireless Symposium 2010, Seiten 567 - 570; Isar Mostafanezhad, Olga Boric-Lubecke und Victor Lubecke, "A Coherent Low IF Receiver Architecture for Doppler Radar Motion Detector Used in Life Signs Monitoring", IEEE Radio and Wireless Symposium 2010, Seiten 571 - 574; sowie Kyohei Otha, Katsushi Ono, Isamu Matsunami und Akihiro Kajiwara, "Wireless Motion Sensor Using Ultra-wideband Impulse-radio", IEEE Radio and Wireless Symposium 2010, Seiten 13 - 16; verwiesen, welche durch Bezugnahme hier aufgenommen werden. Spezielle Anwendungen solcher Doppler- und UWB-Impulsradar-Sensoren für die Airbagsteuerung sind beispielsweise in den Patentveröffentlichungen US 2001/0042977 A1, DE 10 2005 020 847 A1 und US 7 134 687 B2 beschrieben. Gemäß der DE 10 2005 020 847 A1 werden UWB-Radargeräte in die Sitzlehnen integriert, vermessen den jeweiligen Insassen und passen das Airbag-System und verschiedener Komfortfunktionen an dessen gemessene Sitzposition, Größe und Statur an.

Die vorliegende Erfindung setzt sich zum Ziel, auf Grundlage der bekannten Technologien eine neue Lösung zur insassenzahlabhängigen Vermautung von Fahrzeugen in Straßenmautsystemen zu schaffen, welche die Vorteile einer berührungslosen Insassenvermessung mittels biometrischer Radarsensoren einsetzbar macht.

Dieses Ziel wird in einem ersten Aspekt der Erfindung mit einem Fahrzeuggerät erreicht, mit
einem auf den Fahrzeuginnenraum richtbaren Doppler- oder UWB-Impulsradar zur Messung von Bewegungen und Erzeugung zumindest eines diese repräsentierenden Messsignals; und
einer Auswerteeinrichtung, welche dafür ausgebildet ist, Signalmuster, die für Herz- oder Atmungsaktivitäten eines Insassen typisch sind, im Messsignal zu detektieren, die zu einem Beobachtungszeitpunkt gleichzeitig auftretenden Signalmuster zu zählen, und die Mautdaten in Abhängigkeit des Zählwerts zu berechnen.

In einem zweiten Aspekt schafft die Erfindung ein Verfahren zur insassenzahlabhängigen Vermautung von Fahrzeugen im Rahmen eines Straßenmautsystems, umfassend:
Richten eines Doppler- oder UWB-Impulsradars auf den Fahrzeuginnenraum, um Bewegungen darin zu messen und zumindest ein dieses repräsentierende Messsignal zu erzeugen;
Detektieren von Signalmustern, die für Herz- oder Atmungsaktivitäten eines Insassen typisch sind, im Messsignal;
Zählen von zu einem Beobachtungszeitpunkt gleichzeitig auftretenden Signalmustern; und
Berechnen von Mautdaten in Abhängigkeit des Zählwerts.

Die Erfindung ermöglicht eine berührungslose, störungsunanfällige und genaue Bestimmung einer insassenzahlabhängigen Maut aufgrund der Detektion der Vitalfunktionen Herzschlag und/oder Atmung der einzelnen Insassen. Betrugsversuche durch Insassen, Irrtümer durch Kontrollpersonal und Fehlmessungen durch Abschattungen oder Fremdgegenstände werden dadurch weitgehend ausgeschlossen. Im Ergebnis kann ein nahezu 100%-iger Vermautungsgrad z.B. von HOT-Lanes erreicht werden.

In einer ersten bevorzugten Ausführungsform der Erfindung werden die Zählwerte von mehreren aufeinanderfolgenden Beobachtungszeitpunkten zu einem Mittelwert gemittelt und die Mautdaten aus diesem Mittelwert berechnet, und die Auswerteeinrichtung des Fahrzeuggeräts ist auch für die Ausführung dieser Mittelungsfunktion ausgebildet. Diese. Ausführungsform verhindert Störungen durch vorübergehende Fehlmessungen oder parasitäre Mitmessungen z.B. von Insassen eines Nebenfahrzeugs, Passanten usw., die zufällig vom Streufeld des Doppler- oder UWB-Impulsradars miterfasst werden. Situationen, in denen sich solche Störungen häufen, sind beispielsweise Kreuzungen, an denen mehrere Fahrzeuge zum Halten kommen, oder wenn sich mehrere Fahrzeuge auf parallelen Fahrspuren mit annähernd gleicher Geschwindigkeit fortbewegen. Hier befinden sich Fahrzeuge über einen beschränkten Zeitraum in unmittelbarer örtlicher Nähe, so daß der Fahrzeugsensor keine zuverlässige Zuordnung des Aufenthaltsorts der Personen des jeweiligen Fahrzeugs treffen kann. Durch die Mittelung über einen längeren Beobachtungszeitraum werden solche vorübergehenden Störungen ausgeblendet.

Zur Unterdrückung von Störungen erweist es sich weiters als günstig, wenn beim Zählen nur jene Signalmuster berücksichtigt werden, welche über mehrere Beobachtungszeitpunkte im Mittel keine Relativgeschwindigkeit des dem jeweiligen Signalmuster zugrundeliegenden Insassen anzeigen. Erfindungsgemäß werden somit die Eigengeschwindigkeit bzw. Beschleunigung der zu detektierenden Personen mitberücksichtigt: Innerhalb des Fahrzeugs mit dem Sensor ist die Komponente der Eigengeschwindigkeit des Meßsignals Null, andere Fahrzeuge haben zumindest zeitweise andere Eigengeschwindigkeiten. Die detektierten Signalmuster können daher auf mit der Eigengeschwindigkeit des Fahrzeugs identische Eigengeschwindigkeiten verglichen werden, um eine zuverlässige Zuordnung der gewählten Insassen zum jeweiligen Fahrzeug zu erreichen.

Günstig ist es überdies, wenn die zeitliche Mittelung bevorzugt an einer geographischen Position initiiert wird, z.B. Beginn einer HOT-/HOV-Lane, an der durch eine bauliche Trennung (z.B. Separierung einer Fahrspur) eindeutig nur die Insassen eines Fahrzeugs gemessen werden. Demgemäß werden der bzw. die Beobachtungszeitpunkte dann ausgelöst, wenn das Fahrzeug eine vorgegebene Position erreicht, wozu das Fahrzeuggerät bevorzugt eine entsprechende Positionsbestimmungseinrichtung, beispielsweise einen Satellitennavigationsempfänger, aufweist.

Auch ist es möglich, daß die Geschwindigkeit des Fahrzeugs gemessen, daraus Beschleunigungsphasen ermittelt und die Beobachtungszeitpunkte in Beschleunigungsphasen des Fahrzeugs gewählt werden. In solchen Beschleunigungsphasen ist es besonders unwahrscheinlich, daß parallel fahrende Fremdfahrzeuge dieselbe Geschwindigkeit haben, sodaß Insassen von Fremdfahrzeugen, die somit von Null verschiedene (gemittelte) Relativgeschwindigkeiten haben, besonders leicht separierbar sind.

Zur Vermeidung von Störstrahlungen und Störmessungen ist es auch besonders günstig, wenn die Antennencharakteristik des Doppler- oder UWB-Impulsradars an den Fahrzeuginnenraum angepasst ist.

In einer weiteren bevorzugten Ausführungsform des Fahrzeuggeräts der Erfindung besitzt das Doppler- oder UWB-Impulsradar für jeden Sitzplatz des Fahrzeugs eine eigene, auf diesen ausrichtbare Sendeempfangsantenne für die Erzeugung eines eigenen Messsignals, in dem die Signalmuster insassensepariert detektierbar sind. Diese Variante erhöht den Hardwareaufwand auf Hochfrequenzseite des Fahrzeuggeräts, vereinfacht jedoch die Signalverarbeitung im Signalprozessorteil des Fahrzeuggeräts.

Eine alternative bevorzugte Ausführungsform des Fahrzeuggeräts der Erfindung zeichnet sich dadurch aus, dass das Doppler- oder UWB-Impulsradar für den gesamten Fahrzeuginnenraum eine gemeinsame Sendeempfangsantenne für die Erzeugung eines gemeinsamen Messsignals besitzt, in dem gleichzeitig auftretende Signalmuster durch einen Korrelationsvergleich mit vorgegebenen Referenz-Signalmustern detektierbar sind. Diese Variante vereinfacht die Hochfrequenzseite des Fahrzeuggeräts auf Kosten einer erhöhten Komplexität des Signalprozessorteils.

Die insassenzahlabhängig berechneten Mautdaten können im Fahrzeuggerät für einen späteren Abruf gespeichert oder z.B. direkt dazu verwendet werden, ein auf einer Guthabenkarte des Fahrzeuggeräts gespeichertes Guthabenkonto zu dekrementieren. In einer alternativen Ausführungsform der Erfindung werden die berechneten Mautdaten an eine Zentrale des Straßenmautsystems gesendet, und das Fahrzeuggerät der Erfindung besitzt dazu einen an die Auswerteeinrichtung angeschlossenen Sendeempfänger zum Kommunizieren der insassenzahlabhängig berechneten Mautdaten vom Fahrzeuggerät an zumindest eine Funkbake des Straßenmautsystems.

Die Erfindung wird nachstehend anhand bevorzugter Ausführungsungsbeispiele unter Bezugnahme auf die begleitenden Zeichnungen näher erläutert, in denen zeigen:
Fig. 1 ein Straßenmautsystem der Erfindung schematisch im Überblick;
Fig. 2 ein Blockschaltbild eines Fahrzeuggeräts der Erfindung;
die Fig. 3 und 4 den Innenraum eines mit verschiedenen Ausführungsformen eines Fahrzeuggeräts der Erfindung ausgestatteten Fahrzeugs in der Seitenansicht bzw. der Draufsicht;
die Fig. 5 und 6 Referenz-Signalmuster von Radarmessungen der Körperbewegungen eines Insassen aufgrund von Atmungsaktivität (Fig. 5) und Herzschlag (Fig. 6);
Fig. 7 ein beispielhaftes Messsignal eines UWB-Impulsradars des Fahrzeuggeräts der Erfindung, welches die Bewegungsmuster mehrerer Insassen gleichzeitig repräsentiert; und
Fig. 8 aus dem Messsignal von Fig. 7 gewonnene insassenseparierte Signalmuster, die in der Auswerteeinrichtung bzw. dem Verfahren der Erfindung zur Berechnung der Mautdaten herangezogen werden.

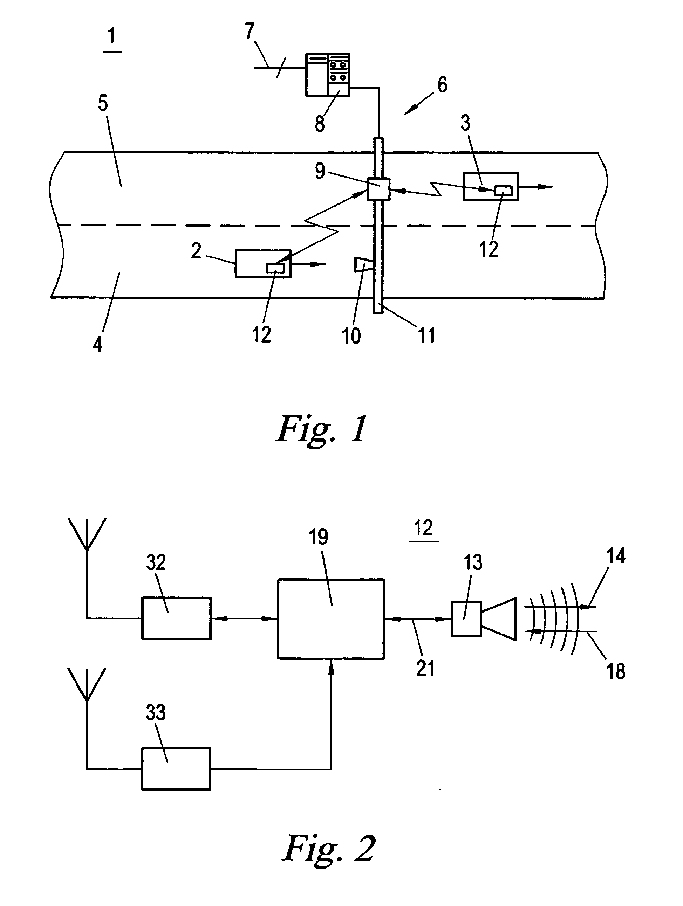

Fig. 1 zeigt einen beispielhaften Ausschnitt eines Straßenmautsystems 1, im Rahmen dessen sich Fahrzeuge 2, 3 auf Fahrbahnen 4, 5 bewegen. Das Straßenmautsystem 1 umfasst beispielsweise eine Vielzahl straßenseitig aufgestellter Funkbaken 6, die über Datenleitungen 7 mit einer (nicht dargestellten) Zentrale des Straßenmautsystems 1 in Verbindung stehen können. Die Funkbaken 6 ("roadside equipment", RSE) umfassen beispielsweise einen lokalen Rechner 8, an den ein Sendeempfänger 9 und zumindest eine Kamera 10 angeschlossen sind, welche von einer die Fahrbahnen 4, 5 überspannenden Montagebrücke 11 getragen werden.

Die Fahrzeuge 2, 3 sind ihrerseits mit Fahrzeuggeräten (onboard units, OBUs) 12 ausgestattet, die in Funkkommunikation mit den Sendeempfängern 9 der Funkbaken 6 treten können, um Mautdaten an das Straßenmautsystem 1 abzusetzen, welche darin zu entsprechenden Mauttransaktionen führen. Die Kamera 10 kann vom Rechner 8 angesteuert werden, um Bildaufnahmen von Fahrzeugen 2, 3 anzufertigen, welche Mautvergehen begehen, beispielsweise durch fehlende oder falsch eingestellte OBUs 12 oder bei mangelnder Kontodeckung für die Entrichtung der sich aus den Mautdaten ergebenden Mautgebühren usw.

Die Funkbaken 6 und OBUs 12 können z.B. nach den DSRC-(dedicated short range communication) oder WAVE- (wireless access in a vehicle environment) -Standards kommunizieren. Antelle der gezeigten Straßenmautsysteme 1 könnten z.B. auch ein GNSS/PLMN (global navigation satellite system/public land mobile network) -Straßenmautsystem verwendet werden, bei dem satellitengestützt verortete OBUs 12 über ein Mobilfunknetz Mautdaten (z.B. inklusive Positionsdaten) absetzen.

Die Mautgebühren im Straßenmautsystem 1 werden zumindest teilweise aufgrund der Insassenanzahl eines Fahrzeugs 2, 3 bestimmt, z.B. für die Benutzung einer "HOT-Lane" wie der Fahrbahn 4, für welche eine erhöhte Mautgebühr zu entrichten ist, wenn das Fahrzeug 2 eine geringe Insassenanzahl hat. Um die Mautgebühren insassenzahlabhängig und automatisiert berechnen zu können, ist die OBU 12 mit einem Insassendetektor ausgestattet, der die Anzahl der Fahrzeuginsassen zählt, wie anhand der Fig. 2 bis 8 nun ausführlicher erörtert wird.

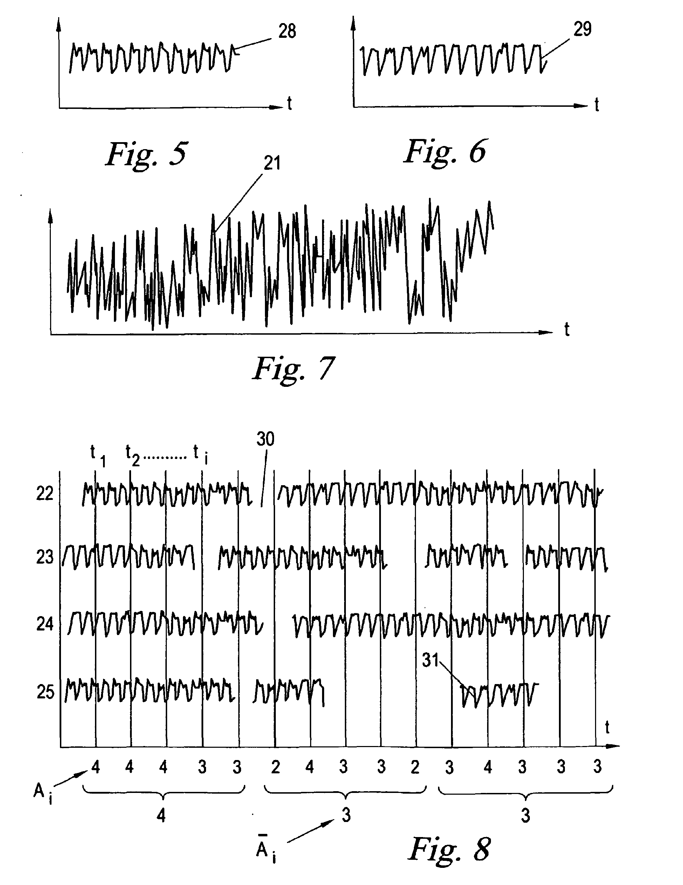

Wie in den Fig. 2 bis 4 schematisch dargestellt, ist die OBU 12 mit einem Continuous-wave (CW) -Dopplerradar oder Ultra-wideband- (UWB) -Impulsradar 13 ausgestattet, welches Radarwellen 14 auf den Fahrzeuginnenraum 15, genauer auf Insassen 16 auf Fahrzeugsitzen 17, ausstrahlt und von diesen reflektierte Radarwellen 18 empfängt. Die OBU 12 kann dazu z.B. an der Innenseite der Windschutzscheibe 27 des Fahrzeugs 2, 3 befestigt werden. Mit Hilfe des Radars 13 können Bewegungen im Fahrzeuginnenraum 15 gemessen und ein hiefür repräsentatives Messsignal 21 (siehe auch Fig. 7) für eine Auswerteeinrichtung 19 der OBU 12 erzeugt werden.

Beide genannten Radararten, u.zw. sowohl UHF-CW-Dopplerradar als auch UWB-Impulsradar, haben eine extrem hohe Empfindlichkeit und extrem feine örtliche Auflösung im Millimeterbereich und können Materialien wie Kleidung und Hautschichten durchdringen, so dass selbst die geringen Bewegungen der Herzkammern, Arterien, Lungenflügel usw. des menschlichen Körpers gemessen werden können. Beim Dopplerradar werden dazu die dopplereffektbedingten Frequenz- bzw. Phasenverschiebungen zwischen den ausgesandten und reflektierten Radarwellen 14, 18 gemessen; beim UWB-Impulsradar wird die Impulslaufzeit extrem kurzer Funkimpulse im Nanosekundenbereich, welche ein sehr breitbandiges Spektrum im Frequenzbereich haben, bei ihrer Reflexion an Zielen wie den Insassen 16 vermessen, um Entfernungen und deren Änderungen zu detektieren. Hinsichtlich der Theorie und Funktionsweise von CW-Doppler- und UWB-Impulsradar wird auf die einleitend genannten Veröffentlichungen verwiesen, deren Offenbarungsgehalt hier durch Bezugnahme aufgenommen wird.

Fig. 5 zeigt ein beispielhaftes Messsignal 28, das mit einem UHF-CW-Dopplerradar 13 von den Bewegungen des oberen Brustkorbes eines Insassen 16 aufgenommen wurde und seine Atmungsaktivität wiedergibt. Fig. 6 zeigt ein beispielhaftes Messsignal 29, das mit einem UWB-Dopplerradar 13 von den Bewegungen der Halsschlagader eines Insassen 16 aufgezeichnet wurde und seinen Herzschlag repräsentiert. Signalmuster, wie sie in den Fig. 5 und 6 dargestellt sind, können in Referenz-Messungen ermittelt und als Referenz-Signalmuster, die für eine Herz- bzw. Atmungsaktivität eines Insassen typisch sind, in einem Speicher des Radars 13 bzw. der OBU 12 zur Verwendung im weiteren Auswerteverfahren gespeichert werden.

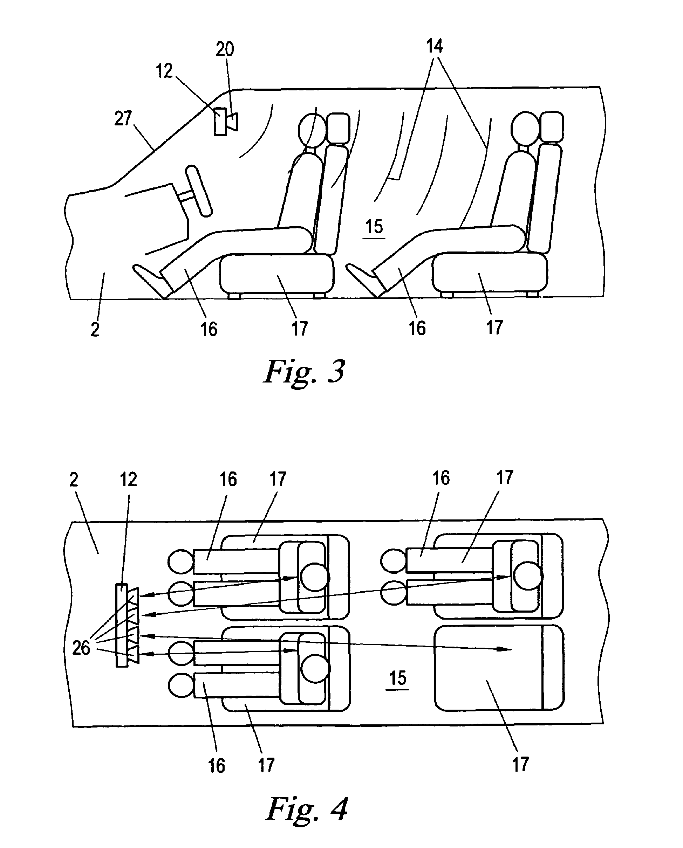

Bei der Ausführungsform von Fig. 3 hat das Radar 13 für den gesamten Fahrzeuginnenraum 15 eine gemeinsame Sendeempfangsantennne 20, welche alle Insassen 16 gleichzeitig erfasst und vermisst. Das vom Radar 13 der Auswerteeinrichtung 19 zugeführte Messsignal 21 ist daher eine Mischung aller Bewegungs-, Herz- und Atmungsaktivitäts-Signalmuster, die von allen Insassen 16 empfangen werden, und beispielhaft in Fig. 7 gezeigt.

Im Messsignal 21 detektiert die Auswerteeinrichtung 19 - durch entsprechende Korrelation mit den bekannten Referenz-Signalmustern 28, 29, - bestmöglich ("best fit") die Signalmuster der einzelnen Insassen 16, um sich überlagernde Signalmuster voneinander zu separieren. Die separierten Signalmuster 22 - 25 sind in Fig. 8 als einzelne Spuren ("tracks") über der Zeit t aufgetragen.

Es versteht sich, dass die Aufteilung der einzelnen detektierten Signalmuster auf die Spuren 22 - 25 nicht völlig eindeutig möglich ist, d.h. Vertauschungen hinsichtlich der Spuren auftreten können, es wird jedoch wieder ein "best fit" durchgeführt, um die Spuren bestmöglich zu füllen. Allfällige Vertauschungen sind aber für das weitere Verfahren unbeachtlich, da es im Wesentlichen nur auf die Anzahl gleichzeitig detektierter Signalmuster ankommt, nicht auf deren Zuordnung zu individuellen Personen.

Bei der alternativen Ausführungsform der OBU 12 von Fig. 4 besitzt das Radar 13 für jeden Sitzplatz 17 des Fahrzeugs 2 (oder für verschiedene Gruppen von Sitzplätzen) jeweils eine eigene, auf diesen Sitzplatz ausgerichtete Sendeempfangsantenne 26, um gleich ein insassensepariertes Messsignal zu erzeugen, d.h. ein mehrspuriges Messsignal, wie es in Fig. 8 in Form der Messsignalspuren 22 - 25 bereits gezeigt ist.

Die insassenseparierten Spuren 22 - 25 des Messsignals 21 werden anschließend von der Auswerteeinrichtung 19 der OBU 12 hinsichtlich zeitlicher Koinzidenz, d.h. Gleichzeitigkeit zu bestimmten Beobachtungszeitpunkten t₁, t₂, ..., allgemein tᵢ, analysiert. Die Anzahl Aᵢ der zu einem bestimmten Beobachtungszeitpunkt tᵢ gleichzeitig auftretenden detektierten Signalmuster 22 - 25 wird gezählt und ist in Fig. 8 unter den jeweiligen Beobachtungszeitpunkten tᵢ angeführt.

Messfehler, Abschattungen, Korrelationsunsicherheiten usw. können zu Unterbrechungen bzw. "Aussetzern" 30 führen, welche zu einer vorübergehend zu geringen Insassenanzahl Aᵢ führen können. Umgekehrt können Streu- bzw. Fehlmessungen z.B. von Insassen benachbarter Fahrzeuge, Passanten usw. zu kurzfristig auftauchenden Signalmustern 31 und einem zu hohen Zählwert Aᵢ führen. Bevorzugt werden daher die Zählwerte Aᵢ aus mehreren aufeinanderfolgenden Beobachtungszeitpunkten tᵢ über einen Beobachtungszeitraum gemittelt, um gemittelte Insassenanzahlen Ãᵢ zu erhalten.

Aus den Signalmustern 22 - 25, welche auf die Bewegungen der Insassen 16 (bzw. deren Körperteile) zurückzuführen sind, lassen sich auch gemittelte Relativgeschwindigkeiten der Insassen 16 gegenüber der OBU 12 bestimmen. Bevorzugt werden beim Ermitteln der Zählwerte Aᵢ bzw. Ãᵢ nur jene Signalmuster 22 - 25 berücksichtigt, welche keine Relativgeschwindigkeit des dem jeweiligen Signalmuster zugrunde liegenden Insassen 16 gegenüber der OBU 12 anzeigen. Dadurch kann das versehentliche Mitzählen von Insassen benachbarter Fahrzeuge wesentlich reduziert werden, weil diese in der Regel eine - in einem mehrere Beobachtungszeitpunkte tᵢ umfassenden Beobachtungszeitraum - von Null signifikant verschiedene, d.h. einen Schwellwert überschreitende Relativgeschwindigkeit zur OBU 12 haben.

Die Zählwerte Aᵢ bzw. Aᵢ werden anschließend dazu verwendet, um davon abhängige Mautdaten in der OBU 12 zu berechnen, beispielsweise eine Mautgebühr, welche mit steigender Insassenanzahl sinkt und umgekehrt.

Die so berechneten insassenzahlabhängigen Mautdaten können in einem Speicher der OBU 12 für eine spätere Auslesung und Auswertung gespeichert werden oder werden bevorzugt über einen Sendeempfänger 32 der OBU 12 an das Straßenmautsystem 1, z.B. den Sendeempfänger 9 der nächstliegenden Funkbake 6, zur weiteren Verrechnung im Straßenmautsystem 1 gesandt.

Die OBU 12 kann ferner mit einer Positionsbestimmungseinrichtung 33 zur Bestimmung ihrer eigenen Position ausgestattet sein, bevorzugt einem Satellitennavigationsempfänger, insbesondere GPS-Empfänger. Dadurch können der bzw. die Beobachtungszeitpunkt(e) tᵢ ortsabhängig ausgewählt bzw. ausgelöst werden, d.h. wenn das Fahrzeug 2, 3 eine vordefinierte Geoposition erreicht. Eine solche Geoposition kann beispielsweise ein vordefinierter Zählpunkt sein, zu dem die Insassenzahl ermittelt werden soll, gleichsam eine "virtuelle Zählstelle", oder eine günstige Zählgelegenheit an einer fahrzeugvereinzelnden Separierungsspur, auf der Fahrzeuge mit Abstand hintereinanderfahren, sodaß dort die Gefahr des Mitzählens von Insassen von Fremdfahrzeugen reduziert ist.

Eine weitere Möglichkeit ist, daß mit Hilfe der Positionsbestimmungseinrichtung 33 (oder einer alternativen Geschwindigkeitsmeßeinrichtung) des Fahrzeugs 2, 3 dessen Geschwindigkeit gemessen und daraus Beschleunigungsphasen des Fahrzeugs 2, 3 ermittelt werden, welche für die Beobachtungszeitpunkte tᵢ ausgewählt werden. In solchen Beschleunigungsphasen ist es unwahrscheinlich, daß die Insassen des Fahrzeugs 2, 3 dieselbe Relativgeschwindigkeiten haben wie Insassen von umgebenden Drittfahrzeugen, welche in der Regel kaum gleichartig beschleunigen, was in Verbindung mit einer Berücksichtigung der Relativgeschwindigkeiten der den Signalmustern 22 - 25 zugrundeliegenden Insassen wiederum zu einem wirksamen Ausschluß von Insassen von Drittfahrzeugen aus den Zählwerten Aᵢ, Ãᵢ führt.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Fahrzeuggerät (12) zur insassenzahlabhängigen Vermautung eines Fahrzeugs (2, 3) im Rahmen eines Straßenmautsystems (1), **gekennzeichnet durch** die Kombination aus
einem auf den Fahrzeuginnenraum (15) richtbaren Doppler- oder UWB-Impulsradar (13) zur Messung von Bewegungen und Erzeugung zumindest eines diese repräsentierenden Messsignals (21 - 25); und
einer Auswerteeinrichtung (19), welche dafür ausgebildet ist, Signalmuster (28, 29), die für Herz- oder Atmungsaktivitäten eines Insassen (16) typisch sind, im Messsignal (21 - 25) zu detektieren, die zu einem Beobachtungszeitpunkt (tᵢ) gleichzeitig auftretenden Signalmuster (22 - 25) zu zählen und dabei nur jene Signalmuster (22 - 25) zu berücksichtigen, welche über mehrere Beobachtungszeitpunkte (tᵢ) im Mittel keine Relativgeschwindigkeit des das jeweilige Signalmuster (22 - 25) hervorrufenden Insassen anzeigen, und die Mautdaten in Abhängigkeit des Zählwerts (Aᵢ, A̅ᵢ) zu berechnen.

2. Fahrzeuggerät nach Anspruch 1, **dadurch gekennzeichnet, dass** die Auswerteeinrichtung (19) dafür ausgebildet ist, die Zählwerte (Aᵢ) von mehreren aufeinanderfolgenden Beobachtungszeitpunkten (tᵢ) zu einem Mittelwert (A̅ᵢ) zu mitteln und die Mautdaten in Abhängigkeit dieses Mittelwerts (A̅ᵢ) zu berechnen.

3. Fahrzeuggerät nach Anspruch 1 oder 2, **dadurch gekennzeichnet, dass** das Fahrzeuggerät (12) eine Positionsbestimmungseinrichtung (33) aufweist, welche den bzw. die Beobachtungszeitpunkte (tᵢ) der Auswerteeinrichtung (19) auslöst, wenn das Fahrzeug (2, 3) eine vorgegebene Position erreicht.

4. Fahrzeuggerät nach einem der Ansprüche 1 bis 3, **dadurch gekennzeichnet, dass** die Antennencharakteristik des Doppler- oder UWB-Impulsradars (13) an den Fahrzeuginnenraum (15) angepaßt ist.

5. Fahrzeuggerät nach einem der Ansprüche 1 bis 4, **dadurch gekennzeichnet, dass** das Doppler- oder UWB-Impulsradar (13) für jeden Sitzplatz (17) des Fahrzeugs (2, 3) eine eigene, auf diesen ausrichtbare Sendeempfangsantenne (26) für die Erzeugung eines eigenen Messsignals (22 - 25) besitzt, in dem die Signalmuster (28, 29) insassensepariert detektierbar sind.

6. Fahrzeuggerät nach einem der Ansprüche 1 bis 4, **dadurch gekennzeichnet, dass** das Doppler- oder UWB-Impulsradar (13) für den gesamten Fahrzeuginnenraum (15) eine gemeinsame Sendeempfangsantenne (20) für die Erzeugung eines gemeinsamen Messsignals (21) besitzt, in dem gleichzeitig auftretende Signalmuster (22 - 25) durch einen Korrelationsvergleich mit vorgegebenen Referenz-Signalmustern (28, 29) detektierbar sind.

7. Fahrzeuggerät nach einem der Ansprüche 1 bis 6, ferner **gekennzeichnet durch** einen an die Auswerteeinrichtung (19) angeschlossenen Sendeempfänger (31) zum Kommunizieren der insassenzahlabhängig berechneten Mautdaten vom Fahrzeuggerät (12) an zumindest eine Funkbake (6) des Straßenmautsystems (1).

8. Verfahren zur insassenzahlabhängigen Vermautung von Fahrzeugen (2, 3) im Rahmen eines Straßenmautsystems (1), **gekennzeichnet durch**:
Richten eines Doppler- oder UWB-Impulsradars (13) auf den Fahrzeuginnenraum (15), um Bewegungen darin zu messen und zumindest ein dieses repräsentierende Messsignal (21 - 25) zu erzeugen;
Detektieren von Signalmustern (28, 29), die für Herz- oder Atmungsaktivitäten eines Insassen (16) typisch sind, im Messsignal (21 - 25);
Zählen von zu einem Beobachtungszeitpunkt (tᵢ) gleichzeitig auftretenden Signalmustern (22 - 25), wobei nur jene Signalmuster (22 - 25) berücksichtigt werden, welche über mehrere Beobachtungszeitpunkte (tᵢ) im Mittel keine Relativgeschwindigkeit des dem jeweiligen Signalmuster (22 - 25) zugrundeliegenden Insassen anzeigen; und
Berechnen von Mautdaten in Abhängigkeit des Zählwerts (Aᵢ, A̅ᵢ).

9. Verfahren nach Anspruch 8, **dadurch gekennzeichnet, dass** die Zählwerte (Aᵢ) von mehreren aufeinanderfolgenden Beobachtungszeitpunkten (tᵢ) zu einem Mittelwert (A̅i) gemittelt und die Mautdaten aus diesem Mittelwert (A̅ᵢ) berechnet werden.

10. Verfahren nach Anspruch 8 oder 9, **dadurch gekennzeichnet, dass** der bzw. die Beobachtungszeitpunkte (tᵢ) dann ausgelöst werden, wenn das Fahrzeug (2, 3) eine vorgegebene Position erreicht.

11. Verfahren nach Anspruch 8 oder 9, **dadurch gekennzeichnet, dass** die Geschwindigkeit des Fahrzeugs (2, 3) gemessen, daraus Beschleunigungsphasen ermittelt und die Beobachtungszeitpunkte (tᵢ) in Beschleunigungsphasen des Fahrzeugs gewählt werden.

12. Verfahren nach einem der Ansprüche 8 bis 11, **gekennzeichnet durch** den weiteren Schritt des Sendens der Mautdaten an eine Zentrale das Straßenmautsystem (1).

13. Verfahren nach einem der Ansprüche 8 bis 12, **dadurch gekennzeichnet, dass** es zum Vermauten von Fahrzeugen (2, 3) auf HOV-Lanes (4) eingesetzt wird.

## Claims

1. Onboard unit (12) for charging occupant number-dependent tolls for a vehicle (2, 3) in the context of a road toll system (1), **characterized by** the combination of
a Doppler radar or UWB impulse radar (13) that can be directed onto the vehicle interior (15) for measuring movements and generating at least one measurement signal (21-25) representing these; and
an evaluation device (19), which is configured to detect signal patterns (28, 29) in the measurement signal (21-25) that are typical for heart or respiratory activity of an occupant (16), to count those signal patterns (22-25) which occur simultaneously at an observation time (tᵢ) and, in doing so, to take only those signal patterns (22-25) into account that on an average over multiple observation times (tᵢ) indicate no relative speed of the occupant causing the respective signal pattern (22-25)., and to calculate toll data as a function of that count value (Aᵢ, A̅ᵢ).

2. Onboard unit according to claim 1, **characterised in that** the evaluation device (19) is configured to average the count values (Aᵢ) of multiple consecutive observation times (tᵢ) to form a mean value (A̅ᵢ) and to calculate the toll data as a function of this mean value (A̅ᵢ).

3. Onboard unit according to claim 1 or 2, **characterised in that** the onboard unit (12) has a position determination device (33), which starts the observation time or times (tᵢ) of the evaluation device (19) when the vehicle (2, 3) reaches a predetermined position.

4. Onboard unit according to one of claims 1 to 3, **characterised in that** the antenna characteristic of the Doppler radar or UWB impulse radar (13) is matched to the vehicle interior (15).

5. Onboard unit according to one of claims 1 to 4, **characterised in that** for each seat (17) of the vehicle (2, 3) the Doppler radar or UWB impulse radar (13) has its own transceiver antenna (26) that can be directed thereto for the generation of its own measurement signal (22-25), in which the signal patterns (28, 29) can be detected separately according to occupant.

6. Onboard unit according to one of claims 1 to 4, **characterised in that** the Doppler radar or UWB impulse radar (13) has a joint transceiver antenna (20) for the entire vehicle interior (15) for the generation of a joint measurement signal (21), in which simultaneously occurring signal patterns (22-25) can be detected by a correlation comparison with predetermined reference signal patterns (28, 29).

7. Onboard unit according to one of claims 1 to 6, additionally **characterised by** a transceiver (31) connected to the evaluation device (19) for communication of the toll data calculated dependent on the number of occupants from the onboard unit (12) to at least one radio beacon (6) of the road toll system (1).

8. Method for charging an occupant number-dependent toll for vehicles (2, 3) in the context of a road toll system (1), **characterized by**:
directing a Doppler radar or UWB impulse radar (13) onto the vehicle interior (15) to measure movements therein and to generate at least one measurement signal (21-25) representing these;
detecting signal patterns (28, 29) in the measurement signal (21-25) that are typical for heart or respiratory activity of an occupant (16);
counting those signal patterns (22-25) which occur simultaneously at an observation time (tᵢ) whereat only those signal patterns (22-25) are taken into account that on an average over multiple observation times (tᵢ) indicate no relative speed of the occupant causing the respective signal pattern (22-25); and
calculating toll data as a function of that count value (Aᵢ, A̅ᵢ).

9. Method according to claim 8, **characterised in that** the count values (Aᵢ) of multiple consecutive observation times (tᵢ) are averaged to form a mean value (A̅ᵢ) and the toll data are calculated from this mean value (A̅ᵢ).

10. Method according to claim 8 or 9, **characterised in that** the observation time or times (tᵢ) are started when the vehicle (2, 3) reaches a predetermined position.

11. Method according to claim 8 or 9, **characterised in that** the speed of the vehicle (2, 3) is measured, acceleration phases are determined therefrom, and the observation times (tᵢ) are selected in acceleration phases of the vehicle.

12. Method according to one of claims 8 to 11, **characterised by** the further step of transmitting the toll data to a central of the road toll system (1).

13. Method according to one of claims 8 to 12, **characterised in that** it is used for charging tolls for vehicles (2, 3) on HOV lanes (4).

## Revendications

1. Appareil pour véhicule (12) pour enlever des péages dépendants du nombre de passagers d'un véhicule (2, 3) dans le cadre d'un système de péage routier (1), **caractérisé par** la combinaison des éléments suivants
un radar Doppler ou à impulsions à bande ultralarge (13) dirigeable sur l'intérieur du véhicule (15) pour la mesure de mouvements et la génération au moins d'un signal de mesure les représentant (21-25) ; et
un dispositif d'évaluation (19) qui est réalisé pour détecter des modèles de signaux (28, 29) qui sont typiques d'activités cardiaques ou respiratoires d'un passager (16), dans le signal de mesure (21-25), pour compter les modèles de signaux (22-25) survenant simultanément à un moment d'observation (tᵢ) et pour y prendre en considération uniquement les modèles de signaux (22-25) qui n'indiquent sur plusieurs moments d'observation (tᵢ) en moyenne aucune vitesse relative du passager suscitant le modèle de signal respectif (22-25) et pour calculer les données de péage en fonction de la valeur comptée (Aᵢ, A̅ᵢ).

2. Appareil pour véhicule selon la revendication 1, **caractérisé en ce que** le dispositif d'évaluation (19) est réalisé pour calculer une valeur moyenne (A̅ᵢ) à partir des valeurs comptées (Aᵢ) de plusieurs moments d'observation (tᵢ) successifs et pour calculer les données de péage en fonction de cette valeur moyenne (A̅ᵢ).

3. Appareil pour véhicule selon la revendication 1 ou 2, **caractérisé en ce que** l'appareil pour véhicule (12) présente un dispositif de détermination de position (33) qui déclenche le ou les moments d'observation (tᵢ) du dispositif d'évaluation (19) lorsque le véhicule (2, 3) atteint une position prescrite.

4. Appareil pour véhicule selon l'une quelconque des revendications 1 à 3, **caractérisé en ce que** la caractéristique d'antennes du radar Doppler ou à impulsions à bande ultralarge (13) est adaptée à l'intérieur du véhicule (15).

5. Appareil pour véhicule selon l'une quelconque des revendications 1 à 4, **caractérisé en ce que** le radar Doppler ou à impulsions à bande ultralarge (13) pour chaque place assise (17) du véhicule (2, 3) possède une propre antenne d'émission-réception (26) orientable sur celle-ci pour la génération d'un propre signal de mesure (22-25), dans lequel les modèles de signaux (28, 29) peuvent être détectés séparément du passager.

6. Appareil pour véhicule selon l'une quelconque des revendications 1 à 4, **caractérisé en ce que** le radar Doppler ou à impulsions à bande ultralarge (13) pour l'intérieur entier du véhicule (15) possède une antenne d'émission-réception commune (20) pour la génération d'un signal de mesure commun (21), dans lequel des modèles de signaux (22-25) survenant simultanément peuvent être détectés par une comparaison de corrélation avec des modèles de signaux de référence prescrits (28, 29).

7. Appareil pour véhicule selon l'une quelconque des revendications 1 à 6, de plus **caractérisé par** un émetteur-récepteur (31) raccordé au dispositif d'évaluation (19) pour la communication des données de péage calculées selon le nombre de passager de l'appareil pour véhicule (12) à au moins une radiobalise (6) du système de péage routier (1).

8. Procédé de péage dépendant du nombre de passagers de véhicules (2, 3) dans le cadre d'un système de péage routier (1), **caractérisé par** les étapes suivantes :
diriger un radar Doppler ou à impulsions à bande ultralarge (13) sur l'intérieur du véhicule (15) afin de mesurer des mouvements dans celui-ci et de générer au moins un signal de mesure les représentant (21-25) ;
détecter des modèles de signaux (28, 29), qui sont typiques d'activités cardiaques ou respiratoires d'un passager (16), dans le signal de mesure (21-25) ;
compter des modèles de signaux (22-25) survenant simultanément à un moment d'observation (tᵢ), en prenant en considération uniquement les modèles de signaux (22-25) qui n'indiquent sur plusieurs moments d'observation (tᵢ) en moyenne aucune vitesse relative du passager à la base du modèle de signal respectif (22-25) ; et calculer les données de péage en fonction de la valeur comptée (Aᵢ, A̅ᵢ).

9. Procédé selon la revendication 8, **caractérisé en ce qu'**une valeur moyenne (A̅ᵢ) est calculée à partir des valeurs comptées (Aᵢ) de plusieurs moments d'observation (tᵢ) successifs et les données de péage sont calculées à partir de cette valeur moyenne (A̅ᵢ).

10. Procédé selon la revendication 8 ou 9, **caractérisé en ce que** le ou les moments d'observation (tᵢ) sont déclenchés si le véhicule (2, 3) atteint une position prescrite.

11. Procédé selon la revendication 8 ou 9, **caractérisé en ce que** la vitesse du véhicule (2, 3) est mesurée, des phases d'accélération sont déterminées à partir de celle-ci et les moments d'observation (tᵢ) sont choisis dans des phases d'accélération du véhicule.

12. Procédé selon l'une quelconque des revendications 8 à 11, **caractérisé par** l'autre étape d'émission des données de péage à une centrale du système de péage routier (1).

13. Procédé selon l'une quelconque des revendications 8 à 12, **caractérisé en ce qu'**il est utilisé pour enlever des péages de véhicules (2, 3) sur des voies réservées aux véhicules multioccupants (4).
